# EUROPEAN PATENT SPECIFICATION

(11) **EP 1 773 091 B1**
(45) Date of publication and mention of the grant of the patent: **05.12.2018**
(21) Application number: 06121904.4
(22) Date of filing: 06.10.2006
(51) Int. Cl.: H04W 72/06, H04B 7/26, H04W 84/04, H04W 88/04

(54) **METHOD OF CONFIGURING CHANNEL AND ALLOCATING RESOURCES IN A MULTI-HOP RELAY WIRELESS COMMUNICATION SYSTEM**
VERFAHREN ZUR KANALKONFIGURATION UND RESOURCENZUWEISUNG IN EINEM DRAHTLOSEN MEHRSTRECKEN-RELAISÜBERTRAGUNGSKOMMUNIKATIONSSYSTEM
PROCÉDÉ POUR CONFIGURATION DE CANAL ET D'ALLOCATION DE RESOURCES DANS UN SYSTÈME DE COMMINICATION SANS FIL À RELAIS À BONDS MULTIPLES

(30) Priority: 06.10.2005 US 724019 P; 06.10.2005 US 724119 P; 21.09.2006 KR 20060091533
(43) Date of publication of application: 11.04.2007
(73) Proprietor: Samsung Electronics Co., Ltd., Suwon-si, Gyeonggi-do, 443-742 (KR)
(72) Inventor: Koo, Chang-Hoi, Seongnam-Si 463-776 (KR); Chang, Young-Bin, Anyang-Si 431-724 (KR); Cho, Jae-Weon, Suwon-Si 443-726 (KR); Lim, Hyoung-Kyu, Seoul 150-775 (KR); Lee, Sung-Jin, Seoul 138-917 (KR); Lee, Geun-Ho, Suwon-Si 443-744 (KR); Kang, Hyun-Jeong, Seoul 135-271 (KR); Cleveland, Joseph R., Murphy, TX 75094 (US); Semper, William Joseph, Richardson, TX 75082 (US); Joo, Pan-Yuh, Seoul 137-950 (KR); Rajkotia, Purva R., Plano, TX 75024 (US)
(74) Representative: Grünecker Patent- und Rechtsanwälte PartG mbB

(56) References cited:
- EP-A- 1 575 326
- EP-A2- 0 647 074
- WO-A2-2004/032536
- US-A- 5 862 487
- US-A1- 2005 048 914
- TAMEH E K ET AL: "The use of intelligently deployed fixed relays to improve the performance of a UTRA-TDD system" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 1890-1894, XP010701845 ISBN: 0-7803-7954-3
- HARROLD T J ET AL: "Performance analysis of intelligent relaying in UTRA TDD" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, vol. VOL. 1 OF 4. CONF. 56, 24 September 2002 (2002-09-24), pages 1374-1378, XP010608653 ISBN: 0-7803-7467-3

## Description

The present invention relates generally to a multi-hop relay wireless communication system, and in particular, to a method of configuring a channel and allocating resources.

Provisioning of services with diverse Quality of Service (QoS) levels at about 100Mbps to users is an active study area for a future-generation communication system called a 4^{th} Generation (4G) communication system. Particularly, active research is conducted on provisioning of high-speed service by ensuring mobility and QoS to a Broadband Wireless Access (BWA) communication system such as Wireless Local Area Network (WLAN) and Wireless Metropolitan Area Network (WMAN). Such major examples are Institute of Electrical and Electronics Engineers (IEEE) 802.16d and IEEE 802.16e.

The IEEE 802.16d and IEEE 802.16e communication systems adopt Orthogonal Frequency Division Multiplexing/Orthogonal Frequency Division Multiple Access (OFDM/OFDMA) to physical channels. IEEE 802.16d considers only a single-cell structure with no regard to mobility of Subscriber Stations (SSs). In contrast, IEEE 802.16e supports the SS' mobility to the IEEE 802.16a communication system. Hereinafter, a mobile SS is called an MS.

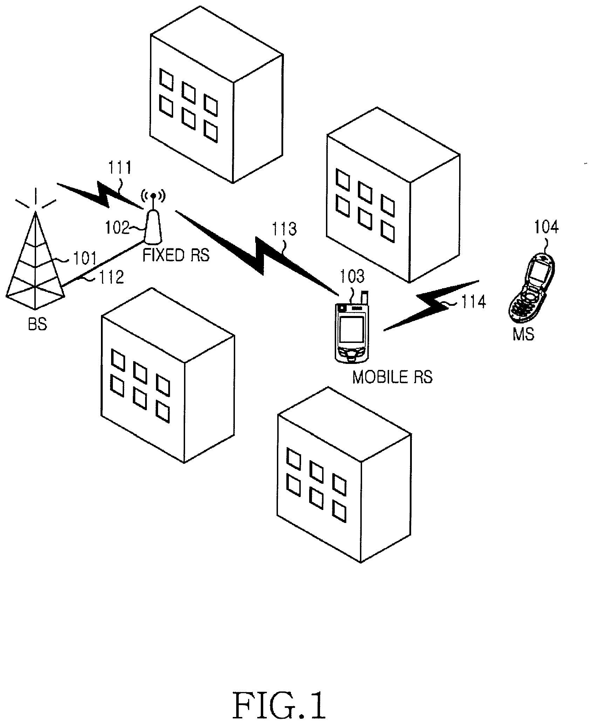

Since signaling is carried out between an MS and a fixed Base Station (BS) via a direct link as illustrated in FIG. 1, a highly reliable radio communication link can be established between them in the typical IEEE 802.16e communication system. However, due to the fixedness of BSs, a wireless network cannot be configured with flexibility. As a result, the IEEE 802.16e communication system is not effective in efficiently providing communication services under a radio environment experiencing a fluctuating traffic distribution and a great change in the number of required calls.

These problems may be solved by applying a multi-hop relay data transmission scheme using fixed RSs, mobile RSs, or general MSs to general cellular wireless communication systems such as IEEE 802.16e. The multi-hop relay wireless communication system can advantageously reconfigure a network rapidly according to a communication environmental change and enables efficient operation of the whole wireless network. For example, it can expand cell coverage and increase system capacity. In the case where the channel status between a BS and an MS is bad, an RS is installed between them so that the resulting establishment of a multi-hop relay through the RS renders a better radio channel available to the MS. With the use of the multi-hop relay scheme at a cell boundary where the channel status is poor, high-speed data channels become available and the cell coverage is expanded.

In a typical wireless communication system, fixed radio channels are available to fixed BSs with limited cell areas and MSs share the radio channel resources for communications. However, the radio communication resources can be neither increased nor reduced for servicing a shadowing area or for cell coverage expansion. Accordingly, there exists a need for defining a method of dynamically allocating radio communication resources using the multi-hop relay scheme.

Tameh E. K. et al.: "The Use of Intelligently Deployed Fixed Relays to Improve the Performance of a ULTRA-TDD system" Vehicular Technology Conference, 2003, VTC 2003-Fall, 2003 IEEE 58th Orlando, FL; USA, October 6 to 9, 2003, Piscataway, NJ, USA, IEEE, US, October 6, 2003, pages 1890 to 1894 relates to intelligent relaying in the form of enhanced capacity and/or coverage and reduced RF images relative to a traditional cellular network. If a user is connected directly to the base station, then only one set of uplink and downlink resource units are allocated. If the connection is by way of a relay node, then two consecutive sets of resource units in the uplink and downlink are allocated.

WO 2004/032536 A2 relates to wireless communication with control WTRU peer-to-peer communication. The wireless network has at least one base station having a transceiver operating in an infrastructure communication mode multimode WTRUs and a controller that transmits control signals via infrastructure communications with a WTRU that controls peer mode communications. The WTRU has a transceiver controller configured to selectively control peer-to-peer communications with other WTRUs based on communication signals received in infrastructure communications with a network base station. The transceiver controller is configured to control the transceiver components to switch between infrastructure communication mode and peer-to-peer communication mode based on quality of service criteria.

EP 0 647 074 A2 describes a fixed cellular communications system consisting of cellular mobile communications network that communicates by radio with a base station of the cellular mobile communications network and by cable with a base station of recordless communications system. When the cellular communications system makes use of TDMA, one single radio transceiver is connected to a transceiver control means to manage the radio channel of allocated so that it can support simultaneously as many communication channels as possible without there being an overlapping of channels.

US 5 862 487 A relates to channel location for collocated systems based on interfering channel groups. A mobile communication system in which a base station commands a mobile station to layer the field strength for a specific channel is provided. The mobile station reports the measured results to the base station. The measured results are sued in conjunction with base station identification codes to obtain a single representative value which is used to determine what channels can be left unused by the system.

US 2005/048914 A1 relates to relay facilitated communication. Communications sourced by a remote unit that is within reception range of a base site can be further facilitated through allocation of one or more relay resources. Such relay resources then serve to effectively increase quality of service for the facilitated communication. This can permit the use of increased data rates for communications from a relatively low power remote unit.

It is the object of the present invention to provide a method of configuring a channel and allocating resources in a multi-hop relay wireless communications system. This object is solved by the subject matter of the independent claims.

Preferred embodiments are defined in the dependent claims.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates the configuration of a multi-hop relay wireless communication system according to the present invention;
FIG. 2 illustrates a communication channel configuring method in the multi-hop relay wireless communication system according to an embodiment of the present invention;
FIG. 3 is a flowchart illustrating a method of allocating a bandwidth and subcarriers to a Relay Station (RS) in a BS in the multi-hop relay wireless communication system;
FIG. 4 illustrates a communication channel configuring method in the multi-hop relay wireless communication system according to another embodiment of the present invention; and
FIG. 5 is a flowchart illustrating a method of allocating a bandwidth and subcarriers to the RS in the BS in the multi-hop relay wireless communication system.

### DETAILED DESCRIPTION OF THE PREFERRED EMBODIMENTS

The embodiments and/or examples disclosed in the following description which are not covered by the appended claims are considered as not being part of the invention.

Preferred embodiments of the present invention will be described herein below with reference to the accompanying drawings. In the following description, well-known functions or constructions are not described in detail since they would obscure the invention in unnecessary detail.

The present invention is intended to provide a method of configuring a channel and allocating resources in a multi-hop relay wireless communication system.

FIG. 1 illustrates the configuration of a multi-hop relay wireless communication system according to the present invention.

Referring to FIG. 1, the multi-hop relay wireless communication system includes a fixed BS 101 and an MS 104. If the MS 104 is outside the cell area of the BS 101 or in a shadowing area created by the existence of buildings between the BS 101 and the MS 104, the MS 104 may not communicate with the BS 101 wirelessly. To solve this problem, a fixed RS 102 or a mobile RS 103 is installed between the BS 101 and the BS 104 so that a signal from the BS 101 can reach the MS 104 in the multi-hop relay wireless communication system. Therefore, the cell coverage of the BS 101 is expanded and the shadowing area is eliminated.

The fixed RS 102 is able to communicate with the BS 101 via a radio link 111 or a wired link 112, and the mobile RS 103 can communicate with the BS 101 or the fixed RS 102 via a radio link 113. The fixed RS 102 or the mobile RS 103 can communicate with the MS 104 via a radio link 114. The fixed RS 102 can communicate directly with the MS 104, not necessarily via the mobile RS 103. The mobile RS 103 can wirelessly communicate with the BS 101 directly, not always via the fixed RS 102.

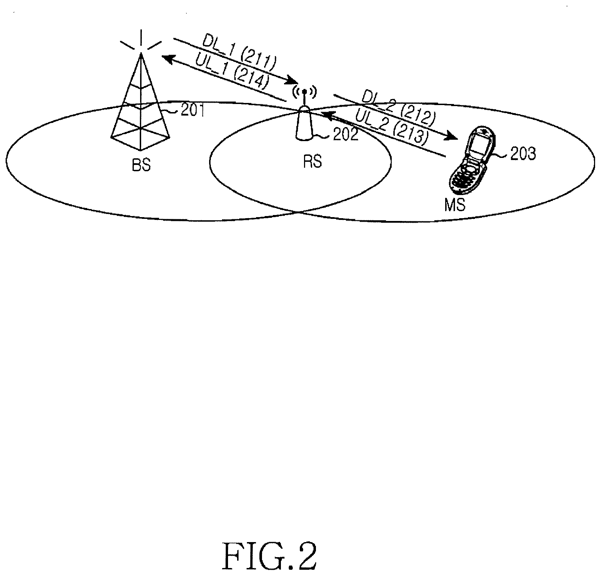

FIG. 2 illustrates a communication channel configuring method in the multi-hop relay wireless communication system according to an embodiment of the present invention.

Referring to FIG. 2, if a BS 201 is located where it cannot communicate directly with an MS 203, it communicates with the MS 203 via an RS 202. The RS 202 is fixed, nomadic, or mobile. If the RS 202 is fixed, it may be connected to the BS 201 by a wired channel or a radio channel. If the RS 202 is not fixed, it may be connected to the BS 201 wirelessly. The RS 202 is connected to the MS 203 by a radio channel.

The downlink is divided into a BS to RS transmission path 211 (DL_1) and an RS to MS transmission path 212 (DL_2). The uplink is divided into an MS to RS transmission path 213 (UL_2) and an RS to BS transmission path 214 (UL_1).

In DL_1, the BS 201 is authorized to schedule for bandwidth allocation to the RS 202, while the MS 203 takes no part in the scheduling. The bandwidth allocation is fixed or dynamic, and channel allocation for data transmission in an allocated bandwidth is also dedicated or dynamic. The allocated channel is a control channel or a traffic channel between the BS 201 and the RS 202.

In DL_2, the RS 202 is authorized to schedule for bandwidth allocation to a plurality of MSs 203 within the bandwidth allocated by the BS 201. The bandwidth allocation and channel allocation to the MSs 203 within an allocated bandwidth can be dynamically carried out. The allocated channels can be used as control channels or traffic channels between the RS 202 and the MSs 203.

In UL_1 and UL 2, bandwidth and channel allocation is carried out in the same manner as in DL_1 and DL_2. Similarly, an allocated channel is used as a control channel or a traffic channel. As with the downlink scheduling, uplink scheduling is performed in such a manner that the BS 201 allocates a bandwidth to the RS 202 and the RS 202 in turn allocates bandwidths to a plurality of MSs 203 within the allocated bandwidth. In the case where the RS 202 allocates the bandwidths to the plurality of MSs 203, the scheduling is basically based on non-contention or contention.

In the case of non-contention-based scheduling, the RS 202 randomly allocates bandwidths to the MSs 203, for the next uplink transmission. However, since the RS 202 cannot decide on bandwidths for the MSs each time, for uplink transmission, the scheduling mostly takes place in a contention manner. That is, the MSs notify the RS 202 of bandwidths to be allocated before data transmission, and only MSs 203 for which the RS 202 allows uplink data transmission are allocated bandwidths for the next uplink data transmission by the RS 202.

Table 1 below summarizes the above-described communication channel configuring method for the downlink and the uplink.

**(Table 1)**

| Path | Direction | Channel allocation | Band allocation | Available channel | Scheduling |
|---|---|---|---|---|---|
| DL_1 | from BS to RS | Fixed channel | Dedicated band allocation | Control channel or traffic channel | BS allocates bandwidth to RS and MS takes no part in scheduling |
| | | Dynamic channel | Dynamic band allocation | | |
| DL_2 | from RS to MS | Dynamic channel | Dynamic band allocation | | RS allocates bandwidths to MSs within bandwidth allocated by BS |
| UL_1 | from RS to BS | Fixed channel | Dedicated band allocation | | Same with the downlink. Allocate bandwidth based on non-contention or contention |
| | | Dynamic channel | Dynamic band allocation | | |
| UL_2 | from MS to RS | Dynamic channel | Dynamic band allocation | | |

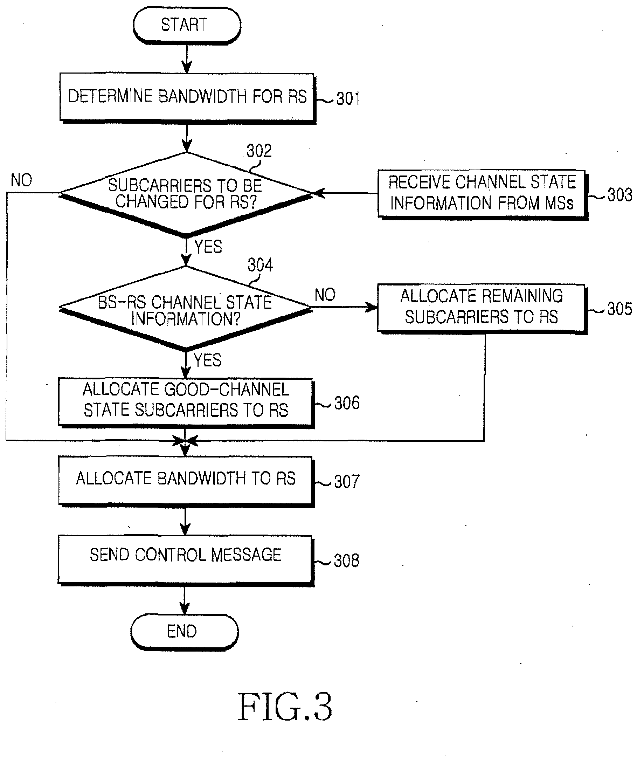

FIG. 3 is a flowchart illustrating a method of allocating a bandwidth and subcarriers to the RS in the BS in the multi-hop relay wireless communication system according to the embodiment of the present invention.

Referring to FIG. 3, the BS 201 determines a bandwidth to be allocated to the RS 202 in step 301. When the RS 202 initially accesses the BS 201, it can request bandwidth allocation to the BS 201 and the BS 201 can determine a bandwidth for allocation by negotiations with the RS 202. If the RS 202 is to change the bandwidth during a service, it may request bandwidth reallocation to the BS 201 and the BS 201 can change the allocated bandwidth by negotiations with the RS 202.

The bandwidth allocated to the RS 202 is used to deliver downlink and uplink data and control information from the RS. In an OFDM system, the bandwidth is defined by subcarriers. The channel statuses of the subcarriers are time-variant. That's why the BS 201 periodically receives reports of channel state information from MSs 203 directly communicating with the BS 201 within its coverage area in step 303.

In step 302, the BS 201 determines whether to change the subcarriers allocated to the RS 202 based on the periodic reports.

If determining to keep the subcarriers unchanged, the BS 201 maintains the allocated bandwidth and subcarriers for the RS 202 in step 308. On the other hand, if determining to change the subcarriers, the BS 201 monitors the presence of channel state information between the RS 202 and the BS 201 in step 304. In the presence of the RS-BS channel state information, the BS 201 allocates subcarriers in good channel state to the RS 202 based on the channel state information in step 306. In the absence of the RS-BS channel state information, the BS 201 allocates good-channel state subcarriers to the MSs 203 based on their channel state information and allocates the remaining subcarriers to the RS 202 in step 305.

The BS 201 allocates a bandwidth to the RS 202 in correspondence with the allocated subcarriers in step 307 and sends a control message including scheduling control information about the allocated bandwidth and subcarriers to the RS 202 in step 308. In an IEEE 802.16 system, for example, the scheduling control information is sent to the RS 202 or the MSs 203 by a Downlink (DL)-MAP or an Uplink (UL)-MAP.

Then the BS 201 ends the algorithm.

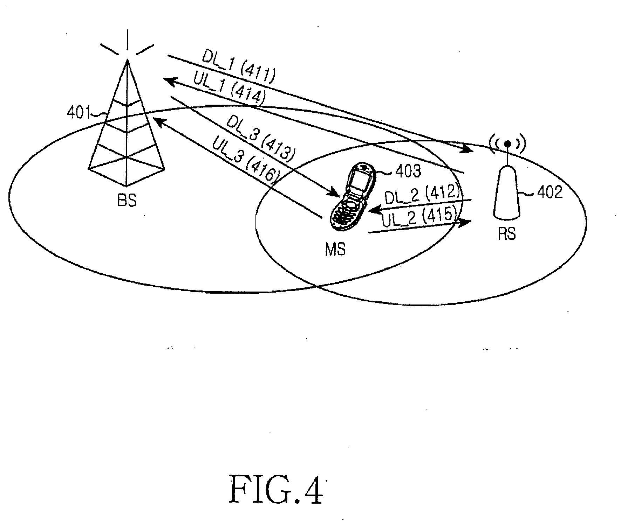

FIG. 4 illustrates a communication channel configuring method in the multi-hop relay wireless communication system according to another embodiment of the present invention.

Referring to FIG. 4, if an MS 403 is located where it can communicate directly with a BS 401 and an RS 402, it communicates with the BS 401 directly or via the RS 402. The RS 402 is fixed, nomadic, or mobile. If the RS 402 is fixed, it may be connected to the BS 401 by a wired channel or a radio channel. If the RS 402 is not fixed, it may be connected to the BS 401 wirelessly. The RS 402 and the BS 401 are connected to the MS 403 by radio channels.

The downlink is divided into a BS to RS transmission path 411 (DL_1), an RS to MS transmission path 412 (DL_2), and a BS to MS transmission path 413 (DL_3). An uplink transmission path is divided into an MS to BS transmission path 416 (UL_3), an MS to RS transmission path 415 (UL_2) and an RS to BS transmission path 414 (UL_1).

In DL_3, the BS 401 is authorized to schedule for bandwidth allocation to the MS 403. The bandwidth allocation can be dynamic, and channel allocation for data transmission within an allocated bandwidth may be also dynamic. An allocated channel is used as a control channel between the BS 401 and the MS 403. In other words, the MS 403 can communicate with the BS 401 only on a control channel, not on a traffic channel. For example, the MS performs network entry for initial access by direct communications with the BS.

In UL_3, bandwidth allocation and channel allocation are carried out in the same manner as in DL_3. As with DL_3, an allocated channel is used as a control channel.

In the other transmission paths, i.e. DL_1, DL_2, UL_1 and UL_2, band allocation and channel allocation are performed in the same manner as in DL_1, DL_2, UL_1, and UL_2 illustrated in FIG. 2, except that an allocated channel is used as a traffic channel between the RS 402 and the MS 403 in DL_2 and UL_2. Thus, there are only data transmission on a traffic channel between the RS 402 and the MS 403 without any control channel communications.

Table 2 below summarizes the above-described downlink and uplink communication channel configuring method.

**(Table 2)**

| Path | Direction | Channel allocation | Band allocation | Available channel | Scheduling |
|---|---|---|---|---|---|
| DL_1 | From BS to RS | Fixed channel | Dedicated band allocation | Control channel or traffic channel | BS allocates bandwidth to RS and MS takes no part in scheduling |
| | | Dynamic channel | Dynamic band allocation | | |
| DL_2 | From RS to MS | Dynamic channel | Dynamic band allocation | Traffic channel | RS allocates bandwidths to MSs within bandwidth allocated by BS |
| DL_3 | From BS to MS | Dynamic channel | Dynamic band allocation | Control channel (e.g. network entry) | BS allocates bandwidth for control channel to MS |
| UL_1 | From RS to BS | Fixed channel | Dedicated band allocation | Control channel or traffic channel | Same with downlink. Allocates bandwidth based on non-contention or contention |
| | | Dynamic channel | Dynamic band allocation | | |
| UL_2 | From MS to RS | Dynamic channel | Dynamic band allocation | Traffic channel | |
| UL_3 | From MS to BS | Dynamic channel | Dynamic band allocation | Control channel | |

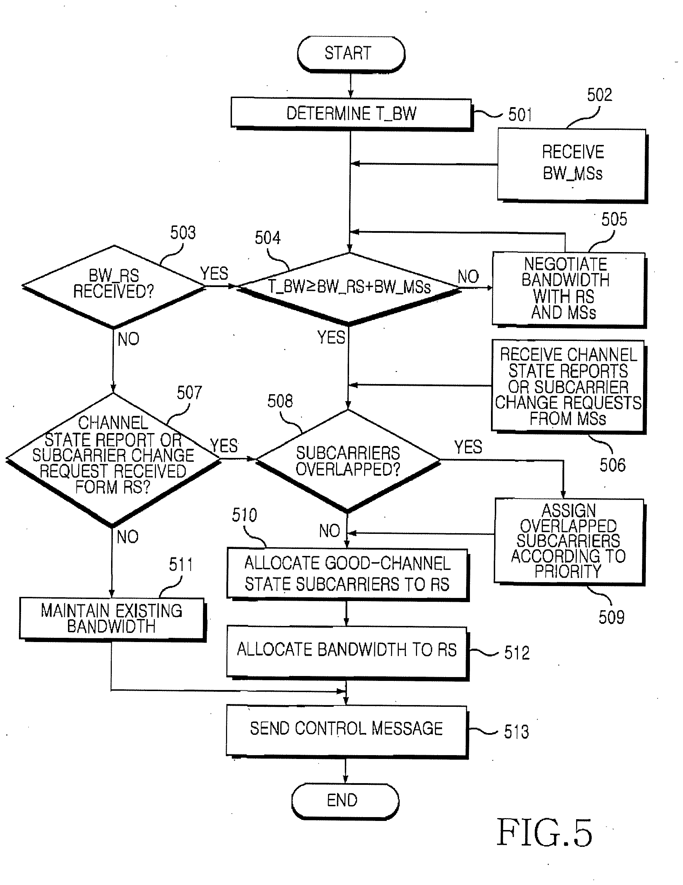

FIG. 5 is a flowchart illustrating a method of allocating a bandwidth and subcarriers to the RS in the BS in the multi-hop relay wireless communication system according to the second embodiment of the present invention.

Referring to FIG. 5, the BS 401 determines a total bandwidth T_BW available to RSs and MSs within its coverage area in step 501. T_BW is predetermined according to the physical layer and the Medium Access Control (MAC) layer.

The BS 401 receives bandwidth request messages from all MSs 403 under its direct management in step 502 and monitors reception of a bandwidth request message from the RS 402 under its direct management in step 503. The bandwidth request messages from the MSs 403 includes information about MS-requested bandwidths BW_MSs and the bandwidth request message form the RS 402 includes information about an RS-requested bandwidth BW_RS. Upon receipt of the bandwidth request message from the RS 402, the BS 401 compares the sum of BW_RS and BW_MSs with T_BW in step 504.

If the sum is larger than T_BW, i.e. the sum of the bandwidths requested by the RS 402 and the MSs 403 is larger than the bandwidth that the BS 401 can support, the BS 401 negotiates with the RS 402 and the MSs 403 such that the sum gets equal to or less than T BW in step 505. If the negotiations are successful, the BS 401 returns to step 504.

On the contrary, if the sum is equal to or less than T BW, the BS 401 receives channel state report messages indicating the channel statuses of subcarriers or subcarrier change request messages requesting allocated subcarriers from the MSs 403 in step 506, and monitors reception of a channel state report message or a subcarrier change request message form the RS 402 in step 507. Upon receipt of the message from the RS 402, the BS 401 determines whether there are subcarriers overlapped between the RS 402 and the MSs 403 based on subcarrier information included in the received message in step 508.

In the absence of any overlapped subcarriers between the RS 402 and the MSs 403, the BS 401 selects good-channel state subcarriers for the RS 402 based on the channel state information received from the RS 402 and the MSs 403 and allocates the selected subcarriers to the RS 402 in steps 509 and 510. At the same time, the BS 401 selects good-channel state subcarriers for the MSs 403 based on the channel state information received from the RS 402 and the MSs 403 and allocates the selected subcarriers to the MSs 403. In the presence of overlapped subcarriers, the BS 401 assigns the overlapped subcarriers to the RS 402 or the MSs 403 according to their priority levels in step 509 and proceeds to step 510.

In step 512, the BS 401 allocates a bandwidth to the RS 402 according to the allocated subcarriers. The BS 401 then sends a control message including scheduling control information about the allocated bandwidth and subcarriers to the RS 402 in step 513. In an IEEE 802.16 system, for example, the scheduling control information is delivered to the RS 402 or the MSs 403 by a DL-MAP or a UL-MAP.

Meanwhile, if the BS 401 has not received the bandwidth request message form the RS 402 in step 503, it maintains the existing bandwidth of the RS 402 and monitors reception of a channel state report message or a subcarrier change request message form the RS 402 in step 507. If neither of the messages is received, the BS 401 maintains the existing bandwidth and subcarriers of the RS 402 in step 511 and proceeds to step 513.

Then the BS 401 ends the algorithm.

As described above, the present invention provides a channel configuration and resource allocation technique for a multi-hop relay wireless communication system. Therefore, a BS can allocate radio resources to an RS fixedly or dynamically.

## Claims

1. A method of allocating resources in a multi-hop relay wireless communication system, comprising the steps of:
1) allocating fixed or dynamic resources to a Relay Station, RS, by a Base Station, BS; wherein the step of 1) comprises the steps of:
determining (301) resources to be initially allocated to the RS;
determining (302), upon receipt (303) of channel state information from mobile stations, MSs, within a cell of the BS, whether to change resources initially allocated to the RS according to the channel state information; and
finally allocating (306) resources in good channel state to the RS according to channel state information (306) between the RS and the BS received from the RS, when the BS determines to change the resources initially allocated to the RS; and
2) allocating dynamic resources to at least one Mobile Station, MS, within the allocated resources by the RS.

2. The method of claim 1, wherein the resources include at least one of a band, subcarriers, and a channel.

3. The method of claim 2, wherein the channel carries at least one of a control signal and a traffic signal.

4. The method of claim 1, wherein the resources include at least one of downlink resources and uplink resources.

5. The method of claim 4, wherein the step of 2) comprises the step of allocating uplink resources to the at least one MS based on non-contention or contention by the RS.

6. The method of claim 1, wherein the step of 1) further comprises the step of, in the absence of the channel state information between the RS and the BS, allocating resources in good channel state to the MSs according to the channel state information received from the MSs and allocating remaining resources to the RS.

7. The method of claim 1, the step of 1) further comprises the step of maintaining the resources allocated to the RS, when the BS determines not to change the resources allocated to the RS.

8. The method of claim 1, wherein the step of 1) further comprises the step of sending a control message including scheduling control information about the allocated resources to the RS.

9. The method of claim 1, wherein the step of determining resources to be allocated to the RS comprises the steps of:
determining the total amount of available resources; and
negotiating resources with the MSs and the RS, if the sum of the amounts of resources requested by the MSs and the RS is greater than the total resource amount.

## Patentansprüche

1. Verfahren zum Zuordnen von Ressourcen in einem drahtlosen Multi-Hop-Relais-Kommunikationssystem, umfassend folgende Schritte:
1) Zuordnen fester oder dynamischer Ressourcen zu einer Relaisstation, RS, durch eine Basisstation, BS;
wobei der schritt von 1) die folgenden Schritte umfasst:
Bestimmen (301) von Ressourcen, die anfänglich der RS zugeordnet werden sollen;
Bestimmen (302) bei Empfang (303) von Kanalzustandsinformationen von Mobilstationen, MSs, innerhalb einer Zelle der BS, ob Ressourcen, die anfänglich der RS zugeordnet wurden, entsprechend der Kanalzustandsinformation geändert werden sollen; und
schließlich Zuordnen (306) von Ressourcen in einem guten Kanalzustand zu der RS gemäß den Kanalzustandsinformationen (306) zwischen der RS und der BS, die von der RS empfangen wurden, wenn die BS bestimmt, die Ressourcen zu ändern, die ursprünglich der RS zugeordnet wurden; und
2) Zuordnen von dynamischen Ressourcen zu wenigstens einer Mobilstation, MS, innerhalb der zugeordneten Ressourcen durch die RS.

2. Verfahren nach Anspruch 1, bei dem die Ressourcen ein Band und/oder Unterträger und/oder einen Kanal umfassen.

3. Verfahren nach Anspruch 2, bei dem der Kanal ein Steuersignal oder ein Verkehrssignal befördert.

4. Verfahren nach Anspruch 1, bei dem die Ressourcen Downlink-Ressourcen und/oder Uplink-Ressourcen umfassen.

5. Verfahren nach Anspruch 4, bei dem der Schritt 2) den Schritt des Zuordnens von Uplink-Ressourcen zu der wenigstens einen MS auf der Grundlage von Zugangskonflikten oder keinen Zugangskonflikten durch die RS umfasst.

6. Verfahren nach Anspruch 1, bei dem der Schritt 1) weiterhin in Abwesenheit der Kanalzustandsinformationen zwischen der RS und der BS das Zuordnen von Ressourcen in guten Kanalzuständen zu den MSs gemäß den Kanalzustandsinformationen, die von den MSs empfangen werden, und das Zuordnen der verbleibenden Ressourcen zu der RS umfasst.

7. Verfahren nach Anspruch 1, bei dem der Schritt 1) weiterhin den Schritt des Beibehaltens der Ressourcen, die der RS zugeordnet sind, umfasst, wenn die BS festlegt, dass die der RS zugeordneten Ressourcen nicht geändert werden.

8. Verfahren nach Anspruch 1, bei dem der Schritt 1) weiterhin den Schritt des Sendens einer Steuernachricht, die Zeitplanungssteuerinformationen über die zugeordneten Ressourcen beinhaltet, zu der RS umfasst.

9. Verfahren nach Anspruch 1, bei dem der Schritt des Bestimmens von Ressourcen, die der RS zugeordnet werden sollen, folgende Schritte umfasst:
Bestimmen der Gesamtmenge verfügbarer Ressourcen; und
Aushandeln von Ressourcen mit den MSs und der RS, sofern die Summe der Menge von Ressourcen, die von den MSs und der RS angefragt werden, größer ist als die Gesamtmenge der Ressourcen.

## Revendications

1. Procédé d'allocation de ressources dans un système de communication sans fil par relais à bonds multiples, comportant les étapes consistant à :
1) allouer des ressources fixes ou dynamiques à une station relais (RS) par une station de base (BS) ;
où l'étape 1) comporte les étapes consistant à : déterminer (301) des ressources destinées à être allouées initialement à la RS ;
déterminer (302), lors de la réception (303) d'informations d'état de canal en provenance de stations mobiles (MS) à l'intérieur d'une cellule de la BS, si les ressources initialement allouées à la RS doivent être changées, en fonction des informations d'état de canal ; et
enfin, allouer (306) des ressources dans un bon état de canal à la RS en fonction des informations d'état du canal (306) entre la RS et la BS reçues en provenance de la RS, lorsque la BS détermine que les ressources initialement allouées à la RS doivent être changées ; et
2) allouer des ressources dynamiques à au moins une station mobile, MS, parmi les ressources allouées à la RS.

2. Procédé selon la revendication 1, où les ressources incluent une bande, et/ou des sous-porteuses, et/ou un canal.

3. Procédé selon la revendication 1, où le canal porte un signal de commande et/ou un signal de trafic.

4. Procédé selon la revendication 1, où les ressources incluent des ressources en liaison descendante et/ou des ressources en liaison montante.

5. Procédé selon la revendication 4, où l'étape 2) comporte l'étape consistant à allouer des ressources en liaison montante à l'au moins une MS en se fondant sur la présence ou l'absence d'un conflit avec la RS.

6. Procédé selon la revendication 1, où l'étape 1) comporte en outre l'étape consistant, en l'absence d'informations d'état de canal entre la RS et la BS, à allouer des ressources dans un bon état de canal aux MS en fonction des informations d'état de canal reçues en provenance des MS et à allouer les ressources restantes à la RS.

7. Procédé selon la revendication 1, où l'étape 1) comporte en outre l'étape consistant à maintenir les ressources allouées à la RS quand la BS détermine que les ressources allouées à la RS ne doivent pas être changées.

8. Procédé selon la revendication 1, où l'étape 1) comporte en outre l'étape consistant à envoyer un message de commande comprenant des informations de commande de planification concernant les ressources allouées à la RS.

9. Procédé selon la revendication 1, où l'étape consistant à déterminer les ressources à allouer à la RS comporte les étapes consistant à :
déterminer la quantité totale de ressources disponibles, et
négocier les ressources avec les MS et la RS si la somme des quantités de ressources demandées par les MS et la RS est supérieure à la quantité totale de ressources.
